# EUROPÄISCHE PATENTANMELDUNG

(11) **EP 2 527 398 A2**
(43) Veröffentlichungstag der Anmeldung: **28.11.2012**
(21) Anmeldenummer: 12168781.8
(22) Anmeldetag: 22.05.2012
(51) Int. Cl.: C08L 61/28, C08L 61/30, C09D 161/28, C09D 161/30, B27K 3/34, B27K 3/50

(54) **Tränkharzzusammensetzung enthaltend quartäre Ammoniumsalze oder Glykole**

(30) Priorität: 24.05.2011 EP 11167226
(71) Anmelder: BASF SE, 67056 Ludwigshafen (DE)
(72) Erfinder: Lunkwitz, Ralph, 67434 Neustadt (DE); Gehrmann, Cornelius, 67061 Ludwigshafen (DE)

(57) **Zusammenfassung**

Wässrige Tränkharzlösung, enthaltend als wesentliche Komponente (A) ein wässriges Vorkondensat auf Basis von Melamin und Formaldehyd und gewünschtenfalls Harnstoff und

(B1) 0,5 bis 4,5 Gew.-%, bezogen auf den Feststoffgehalt von (A), einer quartären Ammoniumverbindung der allgemeinen Formel I

[(R¹)ₙ(R² )₄₋ₙN⁺]X⁻ (I),

wobei n = 0, 1, 2, 3 ist, R¹ für einen C₁- bis C₈-Alkylrest oder einen Benzylrest steht, R² einen C₁- bis C₈-Alkylrest bedeutet, der eine Hydroxy- oder eine Amidogruppe trägt, und X für ein Äquivalent eines Anions steht,

oder

(B2) 0,5 bis 4,5 Gew.-%, bezogen auf den Feststoffgehalt von (A), eines Glykols der allgemeinen Formel II

HO-[CH₂-CH₂-O]ₙ-H (II),

wobei n für 4 - 25 steht.

## Beschreibung

Die vorliegende Erfindung betrifft wässrige Tränkharzlösungen, enthaltend als wesentliche Komponenten (A) ein wässriges Vorkondensat auf Basis von Melamin und Formaldehyd und gewünschtenfalls Harnstoff und (B1) 0,5 bis 4,5 Gew.-%, bezogen auf den Feststoffgehalt von (A), einer quartären Ammoniumverbindung der allgemeinen Formel I

[(R¹)ₙ(R²)₄₋ₙN⁺]X⁻ (I),

wobei n = 0,1, 2, 3 ist, R¹ für einen C₁- bis C₈-Alkylrest oder einem Benzylrest steht, R² einen C₁- bis C₈A-Ikylrest bedeutet, der eine Hydroxy- oder eine Amidogruppe trägt, und X für ein Äquivalent eines Anions steht, oder (B2) 0,5 bis 4,5 Gew.-%, bezogen auf den Feststoffgehalt von (A), eines Glykols der allgemeinen Formel II

HO-[CH₂-CH₂-O]ₙ-H (II),

wobei n für 4 - 25 steht.

Weiterhin betrifft die Erfindung ein Verfahren zur Herstellung solcher Tränkharzlösungen sowie deren Verwendung zur antistatischen Ausrüstung beschichteter Holzwerkstoffe.

Elektrisch leitfähige Holzwerkstoffplatten finden derzeit hauptsächlich nur in der Doppelboden-Industrie zum antistatischen Verbund der Doppelboden-Elemente Verwendung. Im Möbel- und Einrichtungsbereich für EDV-Büroräume und für den Reinraumbereich werden jedoch in letzter Zeit vermehrt Anforderungen an antistatische Eigenschaften dieser Gegenstände gestellt, da moderne Elektronikbauteile sehr empfindlich gegenüber elektrostatischer Entladung reagieren.

EP 0 515 899 A (BASF) beschreibt eine wässrige Tränkharzlösung, welche eine bestimmte quartäre Ammoniumverbindung, beispielsweise N-(2-Hydroxyethyl)-trimethylammoniumchlorid ("Cholinchlorid") enthält, allerdings in einer relativ hohen Menge von 5 bis 40 Gew.-%, bezogen auf das Tränkharz als Feststoff.

Tränkharzlösungen gemäß dem Stand der Technik enthalten in der Regel bestimmte Modifizierungsmittel, welche die Eigenschaften der aus ihnen herstellbaren Tränkharzfolien verbessern sollen. Beispiele für diese Modifizierungsmittel sind Glykole oder auch bestimmte antistatisch wirkende Substanzen, wie quartäre Ammoniumsalze. Nachteilig an diesen Modifizierungsmitteln ist, dass sie als sogenannte "flüchtige organische Verbindungen" ("volatile organic compounds, VOC") aus der Tränkharzfolie in die Umgebungsluft entweichen können. Dies ist im Allgemeinen aus ökologischen Gründen unerwünscht.

Der vorliegenden Erfindung lag daher die Aufgabe zugrunde, den zuvor genannten Nachteilen abzuhelfen und insbesondere Tränkharzlösungen zu finden, die zur Herstellung von filmbeschichteten Holzwerkstoffen mit antistatisch ausgerüsteten Oberflächen geeignet sind und zusätzlich zu Tränkharzfolien mit möglichst geringer Abdampfung an VOC führen.

Demgemäß wurden die eingangs definierten Tränkharzlösungen gefunden. Es wurde zudem überraschend gefunden, dass eine Verringerung der Menge der quartären Ammoniumverbindung und eine Verringerung, bis zum Weglassen, üblicher Modifizierungsmittel dennoch zu Tränkharzfolien mit besseren mechanischen Eigenschaften, hohem Glanz und gesteigerter Wasserdampfbeständigkeit führt.

Als Komponente (A) kommen wässrige Melamin-Formaldehyd-Vorkondensate in Betracht, wobei das Molverhältnis von Melamin zu Formaldehyd 1:1,4 bis 1:2,2 betragen kann. Die Kondensation von Melamin und Formaldehyd erfolgt unter an sich bekannten Bedingungen im basischen Milieu bei pH-Werten von 8 bis 10 und Temperaturen von 80 bis 100°C.

Weiterhin kommen auch Mischkondensate in Betracht, bei denen von 1 bis 10 Gew.-% Harnstoff, bezogen auf Melamin, einkondensiert sein kann. Die Herstellung solcher Mischkondensate ist bekannt und wird üblicherweise bei pH-Werten von 8 bis 10 und Temperaturen von 70 bis 100°C durchgeführt.

Der Endpunkt der jeweiligen Kondensationsreaktion kann über die Trübungstemperatur bestimmt werden, indem 1 g des Reaktionsgemisches mit der 5-fachen Menge an Wasser versetzt werden, worauf die Temperatur gemessen wird, bei der diese Mischung sich eintrübt. Üblicherweise wird bis zu Trübungstemperaturen von 40 bis 60°C kondensiert.

Obwohl für die erfindungsgemäße Tränkharzlösung nicht unbedingt erforderlich, können in einer Ausführungsform bei der Herstellung der Tränkharzkondensate auch übliche Modifizierungsmittel wie Ethylenglykol, Diethylenglykol oder andere Polyalkohole wie Zuckerderivate oder ε-Caprolactam in kleinen Mengen bis zu 2 Gew.-%, bezogen auf den Feststoffgehalt des Tränkharzes, mitverwendet werden oder diese Modifizierungsmittel der fertigen Tränkharzlösung, ebenfalls in einer kleinen Mengen bis zu 2 Gew.-%, bezogen auf den Feststoffgehalt des Tränkharzes, zugesetzt werden.

Die Herstellung der wässrigen Kondensate (A) erfolgt vorteilhaft so, dass Lösungen mit Feststoffgehalten von 40 bis 70 Gew.-% erzielt werden. Als Feststoffgehalt wird hier der Trockenrückstand bezeichnet, der ermittelt wird, indem 1 g Harzlösung zwei Stunden lang im Trockenschrank bei 120°C getrocknet wird.

Als niedermolekulare quartäre Ammoniumverbindungen (B1) kommen Verbindungen der allgemeinen Formel I in Betracht,

[(R¹)ₙ(R²)₄₋ₙN⁺]X⁻ (I),

wobei n = 0, 1, 2, 3 ist, R¹ für einen C₁- bis C₈-Alkylrest oder einen Benzylrest steht und R² einen C₁- bis C₈-Alkylrest bedeutet, der als funktionelle Gruppe die Hydroxygruppe oder die Amidogruppe aufweist, wobei sich die funktionelle Gruppe vorzugsweise in endständiger Position befindet.

X steht für ein Äquivalent eines Anions. Dabei kommen Anionen von Mineralsäuren wie Halogenidanionen, vorzugsweise Chlorid, in Betracht sowie Nitrat, Sulfat, Hydrogensulfat, Phosphat, Hydrogenphosphat oder Dihydrogenphosphat. Weiterhin eignen sich Alkylsulfate wie beispielsweise Methylsulfat oder Ethylsulfat oder auch Alkylsulfonate wie Methylsulfonat oder Ethylsulfonat oder auch Arylsulfonate wie Toluolsulfonate. Auch Anionen organischer Säuren wie Formiat, Oxalat, Acetat oder Maleinat kommen in Betracht.

Vorzugsweise werden als Komponente (B) N-(2-Hydroxyethyl)-trialkyl-ammoniumsalze eingesetzt.

Besonders bevorzugt ist die Verwendung von N-(2-Hydroxyethyl)-trimethylammonium-chlorid (auch als "Cholinchlorid" bezeichnet) oder N-(2-Hydroxyethyl)-trimethylammonium-methylsulfat.

Als Glykole (B2) kommen Verbindungen der allgemeinen Formel II in Betracht,

HO-[CH₂-CH₂-O]ₙ-H (II),

wobei n für 4 - 25 steht.

Bevorzugt ist die Verwendung von 6 - 16, besonders bevorzugt 8 - 14.

Die Menge an (B1) bzw. (B2) wird so gewählt, dass, bezogen auf den Feststoffgehalt von (A), 0,5 bis 4,5 Gew.-% an (B1) bzw. (B2) zugesetzt werden, wobei besonders bevorzugt 0,5 bis 3,0 Gew.-% an (B1) bzw. (B2) verwendet werden.

Die Komponente (B1) bzw. (B2) kann in fester oder in Form einer 60 bis 80 gew.-%igen wässrigen Lösung mit dem wässrigen Kondensat (A) gemischt werden.

Besonders vorteilhafte Eigenschaften weisen die erfindungsgemäßen Tränkharzlösungen dann auf, wenn die Komponente (B1) bzw. (B2) bereits zu Beginn der Kondensation von Melamin, gegebenenfalls Harnstoff und Formaldehyd zugesetzt wird.

In einem gut geeigneten Herstellverfahren wird ein wässriges Vorkondensat (A) auf Basis von Melamin und Formaldehyd und gewünschtenfalls Harnstoff in Gegenwart von 0,5 bis 4,5 Gew.- %, bezogen auf den Feststoffgehalt von (A), einer quartären Ammoniumverbindung (B) der allgemeinen Formel I

[(R¹)ₙ(R²)₄₋ₙN⁺]X⁻ (I)

wobei n = 0,1, 2, 3 ist, R¹ für einen C₁- bis C₈-Alkylrest oder einen Benzylrest steht, R² einen C₁-bis C₈-Alkylrest bedeutet, der eine Hydroxy- oder eine Amidogruppe trägt, und X für ein Äquivalent eines Anions steht, oder einem Glykol (B2) 0,5 bis 4,5 Gew.-%, bezogen auf den Feststoffgehalt von (A), eines Glykols der allgemeinen Formel II

HO-[CH₂-CH₂-O]ₙ-H (II),

wobei n für 4 - 25 steht, bei pH-Werten von 8 bis 10 und Temperaturen von 70 bis 100°C Co-kondensiert.

Wird Harnstoff in diesem Verfahren mitkondensiert, dann in Mengen von 1 bis 10 Gew.-%, bezogen auf Melamin.

Die in diesem Verfahren verwendete Komponente (B1) bzw. (B2) sind oben näher beschrieben.

Vorzugsweise werden in diesem Verfahren als Komponente (B1) N-(2-Hydroxyethyl)-trialkyl-ammoniumsalze eingesetzt. Besonders bevorzugt ist die Verwendung von N-(2-Hydroxyethyl)-trimethylammonium-chlorid (auch als "Cholinchlorid" bezeichnet) oder N-(2-Hydroxyethyl)-triethylammonium-methylsulfat. Die Menge an (B) wird so gewählt, dass, bezogen auf den Feststoffgehalt von (A), besonders bevorzugt 0,5 bis 3,0 Gew.-% an (B) zugesetzt werden. Die Komponente (B) kann in fester oder in Form einer 60 bis 80 gew.%igen wäßrigen Lösung zugesetzt werden.

Vorzugsweise werden in diesem Verfahren als Komponente (B2) eingesetzt.

Die erfindungsgemäßen Tränkharzlösungen eignen sich hervorragend zur Imprägnierung von bedruckten Papieren (in der Fachwelt als "Dekorpapiere" bezeichnet) oder in der Regel unbedruckten Overlaypapieren die jeweils zur Beschichtung von Holzwerkstoffen durch Verpressen mit dem Holzwerkstoff verwendet werden.

Zur Anwendung als Imprägnierflotten werden den Tränkharzlösungen im allgemeinen Härter zugesetzt. Als Härter kommen dabei beispielsweise Maleinsäure, Maleinsäureanhydrid, Ameisensäure, Ammoniumsulfat, Ammoniumsulfit, Ethanolaminhydrochlorid, Dimethylethanolammoniumsulfit sowie Härterkombinationen wie Morpholin/p-Toluolsulfonsäure, N-MethylEthanolamin/S0₂ oder N-Methylethanolamin/ Ethanolamin/S0₂ in Betracht.

Die Härter können in Mengen von 0,2 bis 2 Gew.-%, bezogen auf die Tränkharzlösung, zugegeben werden, wobei dem Fachmann bekannt ist, wie er die Härterdosierung den jeweiligen anwendungstechnischen Erfordernissen anpassen kann, wobei er die Reaktivität der Tränkharzlösung/Härter-Gemische über Messung der Trübungszeiten und Gelierzeiten entsprechend einstellen kann.

Weiterhin können den Imprägnierflotten beispielsweise Netzmittel zugesetzt werden. Als Netzmittel eignen sich beispielsweise ethoxylierte Fettalkohole oder Alkylphenolethoxylate, die üblicherweise in Mengen von 0,02 bis 0,5 Gew.-%, bezogen auf die Harzlösung, zugesetzt werden können.

Bei der Herstellung von beispielsweise beschichteten Holzwerkstoffen werden im allgemeinen zunächst für diesen Zweck übliche Dekorpapiere mit Flächengewichten im Bereich von 60 bis 150 g/m² mit den erfindungsgemäßen Tränkharzlösungen imprägniert, wobei der Harzauftrag ca. 100 bis 150 Gew.-%, bezogen auf das Papiergewicht betragen kann.

Des Weiteren können auch Papiere mit einem Gewicht von 300 g/m² mit einem Harzauftrag von 30 bis 70 Gew.-%, oder Overlay-Papiere mit einem Gewicht von beispielsweise 20 bis 30 g/m² und einem Harzauftrag bis zu 300 Gew.-%, bezogen auf das nichtimprägnierte Papiergewicht imprägniert werden. Für großtechnische Anwendungen erfolgt der Harzauftrag in der Regel mit Hilfe von Imprägniermaschinen.

An den Imprägniervorgang schließt sich üblicherweise ein Trocknungsvorgang an, wobei das beharzte Papier im allgemeinen auf Restfeuchtegehalte von 5 bis 8 Gew.-% eingestellt wird. Die imprägnierten Dekorpapiere oder Overlay-Papiere können anschließend auf Holzwerkstoffe wie Spanplatten oder HDF-Platten aufgebracht werden, indem sie beispielsweise als sog. "Kurztakt-Filme" bei Temperaturen von 150 bis 210°C und Drücken von 15 bis 30 bar während einer Presszeit von 20 bis 60 sec mit dem Holzwerkstoffsubstrat verpresst werden.

Mit den erfindungsgemäßen Tränkharzlösungen lassen sich Laminate beispielsweise für Fußbodenbeläge herstellen. Die mit den erfindungsgemäßen Tränkharzlösungen bzw. Dekor- oder Overlaypapieren hergestellten Oberflächen der entsprechenden Holzwerkstoffe weisen für die Praxis gute elektrische Oberflächenwiderstände (bestimmt nach DIN 53 485 bei 23°C, 50 % relativer Luftfeuchte) im Bereich von 10¹ bis 10¹² Ohm auf und erfüllen die üblichen anwendungstechnischen Forderungen wie beispielsweise guten Glanz und insbesondere gute Wasserbeständigkeit. Darüber hinaus zeigen die so erhältlichen Oberflächen im Begehtest nach EN 1815 geringe Personenaufladungen.

### Beispiele

### Beispiel 1

Eine Mischung aus 924,5 g 49 gew.-%igem wässrigen Formaldehyd und 593,7 g vollentsalztem Wasser wurde auf 30°C temperiert, worauf der pH-Wert des Gemisches mit 25 gew.-%iger wässriger Natronlauge auf 9,2 bis 9,4 eingestellt wurde. Anschließend erfolgte die Zugabe von 27,3 g einer 75 gew.-%igen wässrigen Lösung von N-(2-Hydroxyethyl)-trimethylammoniumchlorid (B1) und 1186 g Melamin. Sodann wurde das Reaktionsgemisch auf 100°C erhitzt, wobei der pH-Wert langsam abfiel und ca. 60 min bei pH 8,6 bis 8,8 gerührt. Sobald eine Probe des Reaktionsgemisches eine Trübungstemperatur von 50°C aufwies, wurde das Reaktionsgemisch auf Raumtemperatur abgekühlt und der pH-Wert mit 25 gew.-%iger wässriger Natronlauge auf 10,0 bis 10,2 eingestellt.

### oder Beispiel

2097 g einer wässrigen 49%-ige Formaldehydlösung und die 1550,6 g vollentsalzten VE-Wasser werden im Reaktionsgefäß vorgelegt und auf 30°C temperiert. Anschließend erfolgt die Zugabe von 129,6 g Pluriol E400 (Polyethylenglykol der mittleren Molmasse 400 g/mol) und der pH-Wert der Reaktionsmischung wird mittels wässriger NaOH-Lösung (25%-ig) auf 9.4 eingestellt. Jetzt erfolgt unter Rühren die Zugabe von 2690,6 g Melamins und die Reaktionsmischung wird unter weiterem Rühren auf Siedehitze erwärmt. Auf dieser Temperatur wird die Reaktionsmischung unter Konstanthalten des pH-Wertes belassen, wobei ggf. mittels wässriger Na-OH-Lösung (25%-ig) nachjustiert werden muss, bis der angestrebte Trübungspunkt erreicht ist. (Kondensationsphase). Nach Erreichen des Trübungspunktes erfolgt die Abkühlung der Reaktionssmischung, deren Filtration und Endeinstellung des pH-Wertes mittels wässriger NaOH-Lösung (25%-ig) auf 9.2.

### Beispiele zum Vergleich

### Beispiel 2

Eine 60 gew.-%ige wässrige Melamin-Formaldehyd-Tränkharzlösung konventioneller Art, enthaltend 2 Gew.-% Polyethylenglykol und 3 Gew.-% Diethylenglykol, jeweils bezogen auf die Gesamtzusammensetzung, als Modifizierungsmittel, aber keine Komponente (B1).

### Beispiel 3

Die Tränkharzlösung aus Beispiel 2, jedoch mit 1 Gew.-%, bezogen auf die Gesamtzusammensetzung, nach der Kondensation zugegebenem N-(2-Hydroxyethyl)-trimethylammoniumchlorid (B1).

### Herstellung der Imprägnierflotten

Zur Herstellung der Imprägnierflotten wurden die Harzlösungen gemäß den Beispielen 1 bis 3 jeweils mit Wasser auf einen Feststoffgehalt von 55 Gew.-% eingestellt und anschließend mit 0,4 Gew.-%, bezogen auf die Harzlösung, einer 85 gew.-%igen wässrigen Lösung eines Härters (Dimethylethanolammoniumsulfit) und mit 0,1 Gew.-%, bezogen auf die Harzlösung, eines handelsüblichen Alkylethoxylat-Netzmittels versetzt.

### Anwendungstechnische Prüfung

Es wurden Overlaypapiere mit einem Flächengewicht von 28 g/m² mit den oben genannten Imrägnierflotten bis zum 1,8-fachen bis 2,2-fachen des Gewichts des nicht-imprägnierten Papiers imprägniert.

Der Restfeuchtegehalt der so erhaltenen Overlaypapiere lag bei ca. 6,5 Gew.-%.

Die auf diese Weise hergestellten Overlayfilme wurden nach dem Kurztaktverfahren (KT-Film) mit 25 bar bei 180°C und 40 sec Presszeit auf übliche beschichtungsfähige HDF-Platten verpresst.

Die Eigenschaften der Oberflächen der so hergestellten Laminate sind in Tabelle 1 aufgelistet.

**Tabelle 1**

| Tränkharz gemäß Beispiel | Wasserdampfbeständigkeit (1) [Schulnotensystem] | Bemerkung |
|---|---|---|
| 1 | 0 | Ohne Modifizierungsmittel, mit Komponente (B) (co-kondensiert) |
| 2 (zum Vergleich) | 1 | Mit Modifizierungsmittel ohne Komponente (B) |
| 3 (zum Vergleich) | 2 | Mit Modifizierungsmittel plus Komponente (B) (nachträglich) |

| | | |
|---|---|---|
| (1) Gemessen mit dem WD-Test wie folgt: Ein wie oben beschrieben hergestellter Laminat Prüfkörper wurde mit der zu testenden Seite nach unten auf die Öffnung eines mit kochendem Wasser gefüllten Erlenmeyerkolbens gelegt und 1 h lang dem Wasserdampf ausgesetzt. Geprüft wurde das optische Aussehen der mit Wasserdampf (100°C) beaufschlagten Oberfläche. | | |

Gewünscht ist ein möglichst geringer Angriff der Oberfläche, ergo möglichst geringe Veränderung der Oberfläche gegenüber dem Ausgangszustand.

Die Beurteilung geschah mit dem Auge und nach dem deutschen Schulnotensystem, das heißt 0 = kein mit dem Auge sichtbarer Angriff, also sehr gute Wasserdampfwiderstandsfähigkeit, ansteigende Zahlen: immer schlechtere Wasserdampfwiderstandsfähigkeit.

## Patentansprüche

1. Wässrige Tränkharzlösung, enthaltend als wesentliche Komponenten (A) ein wässriges Vorkondensat auf Basis von Melamin und Formaldehyd und gewünschtenfalls Harnstoff und (B1) 0,5 bis 4,5 Gew.-%, bezogen auf den Feststoffgehalt von (A), einer quartären Ammoniumverbindung der allgemeinen Formel I
[(R¹)ₙ(R²)₄₋ₙN⁺]X⁻ (I),
wobei n = 0, 1, 2, 3 ist, R¹ für einen C₁- bis C₈-Alkylrest oder einen Benzylrest steht, R² einen C₁- bis C₈-Alkylrest bedeutet, der eine Hydroxy- oder eine Amidogruppe trägt, und X für ein Äquivalent eines Anions steht, oder einem Glykol (B2) 0,5 bis 4,5 Gew.-%, bezogen auf den Feststoffgehalt von (A), eines Glykols der allgemeinen Formel II
HO-[CH₂-CH₂-O]ₙ-H (II),
wobei n für 4 - 25 steht.

2. Wässrige Tränkharzlösung nach Anspruch 1, deren Feststoffgehalt im Bereich von 40 bis 70 Gew.-% liegt.

3. Wässrige Tränkharzlösung nach Anspruch 1 oder 2, enthaltend als Komponente (A) ein wässriges Melamin-Formaldehyd-Kondensat mit einem Molverhältnis von Melamin zu Formaldehyd von 1:1,4 bis 1:2,2.

4. Wässrige Tränkharzlösung nach einem der Ansprüche 1 bis 3, enthaltend eine Komponente (A), bei der bis zu 10 Gew.-% des Melamins durch Harnstoff ersetzt sind.

5. Wässrige Tränkharzlösung gemäß Anspruch 1, erhältlich durch Kondensation der Komponente (A) in Gegenwart der quartären Ammoniumverbindung (B1) oder in Gegenwart der Glykolverbindung (B2).

6. Verfahren zur Herstellung einer elektrisch leitfähigen wässrigen Tränkharzlösung, **dadurch gekennzeichnet, dass** man ein wässriges Vorkondensat (A) auf Basis von Melamin und Formaldehyd und gewünschtenfalls Harnstoff in Gegenwart von 0,5 bis 4,5 Gew.-%, bezogen auf den Feststoffgehalt von (A), einer quartären Ammoniumverbindung (B1) der allgemeinen Formel I
[(R¹)ₙ(R²)₄₋ₙN⁺]X⁻ (I),
wobei n = 0, 1, 2, 3 ist, R¹ für einen C₁- bis C₈-Alkylrest oder einen Benzylrest steht, R² einen C₁- bis C₈-Alkylrest bedeutet, der eine Hydroxy- oder eine Amidogruppe trägt, und X für ein Äquivalent eines Anions steht, oder einem Glykol (B2) 0,5 bis 4,5 Gew.-%, bezogen auf den Feststoffgehalt von (A), eines Glykols der allgemeinen Formel II
HO-[CH₂-CH₂-O]ₙ-H (II),
wobei n für 4 - 25 steht, bei pH-Werten von 8 bis 10 und Temperaturen von 70 bis 100°C herstellt.

7. Verwendung der Tränkharzlösungen wie in den Ansprüchen 1 bis 7 definiert zur Herstellung von filmbeschichteten Holzwerkstoffen mit antistatisch ausgerüsteten Oberflächen.
